# EUROPÄISCHE PATENTSCHRIFT

(11) **EP 4 324 663 B1**
(45) Veröffentlichungstag und Bekanntmachung des Hinweises auf die Patenterteilung: **31.12.2025**
(21) Anmeldenummer: 23189562.4
(22) Anmeldetag: 03.08.2023
(51) Int. Cl.: B60C 11/11, B60C 11/12

(54) **FAHRZEUGLUFTREIFEN**
PNEUMATIC TYRE FOR VEHICLES
BANDAGE PNEUMATIQUE POUR VÉHICULE

(30) Priorität: 19.08.2022 DE 102022208619
(43) Veröffentlichungstag der Anmeldung: 21.02.2024
(73) Patentinhaber: Continental Reifen Deutschland GmbH, 30175 Hannover (DE)
(72) Erfinder: Özüduru, Ahmet, 30165 Hannover (DE); Soyyuece, Atakan, 30165 Hannover (DE); Ecke, Stefan, 30165 Hannover (DE)
(74) Vertreter: Continental Corporation

(56) Entgegenhaltungen:
- WO-A1-2023/107828
- AU-A1- 2020 275 890
- JP-A- 2002 316 517
- JP-B2- 4 327 962
- US-B2- 11 186 054

## Beschreibung

Die Erfindung betrifft einen Fahrzeugluftreifen mit einem Laufstreifen mit Profilblöcken und/oder mit zumindest einer in Umfangsrichtung umlaufenden Profilrippe, in welchen bzw. in welcher in Draufsicht unter einem Winkel von 0° bis zu 50° zur axialen Richtung verlaufende, jeweils zwei Einschnittwände aufweisende Einschnitte ausgebildet sind, wobei jeder Einschnitt zumindest in einem in Draufsicht über einen Teil des Einschnitts reichenden Einschnittbereich auf seine maximale Tiefe von 70% bis 100% der Profiltiefe reicht, wobei der Einschnitt in diesem Einschnittbereich, im Querschnitt betrachtet, einen gerade verlaufenden, radial äußeren Einschnittabschnitt mit einer konstanten Breite von 0,6 mm bis 2,0 mm, einen an diesen anschließenden, eine einzige Ausbauchung bildenden, durchgehend bogenförmig verlaufenden, mittleren Einschnittabschnitt und einen auf die maximale Tiefe reichenden, kanalförmigen, radial inneren Einschnittabschnitt mit einer maximalen Breite von 150% bis 400% der Breite des radial äußeren Einschnittabschnitts aufweist.

Ein derartiger Fahrzeugluftreifen, welcher vorzugsweise ein Nutzfahrzeugreifen ist, ist beispielsweise aus der EP 3 414 112 B1 bekannt. Der Laufstreifen des Reifens weist mittlere Profilblockreihen mit Profilblöcken mit je einem in Draufsicht zur axialen Richtung unter einem Winkel von 0° bis 50° verlaufenden Einschnitt mit einer maximalen Tiefe von bis zu 100% der Profiltiefe auf. Der Einschnitt setzt sich, in Draufsicht betrachtet, aus einem langgestreckt Z-förmig verlaufenden, zentralen Einschnittbereich und zwei gerade verlaufenden, randseitigen Einschnittbereichen zusammen. Der Einschnitt weist in den randseitigen Einschnittbereichen, im Querschnitt betrachtet, einen gerade verlaufenden, radial äußeren Einschnittabschnitt, zwei jeweils eine Ausbauchung bildende, im Querschnitt bogenförmig verlaufende, mittlere Einschnittabschnitte und einen auf die maximale Tiefe reichenden, kanalförmigen, radial inneren Einschnittabschnitt mit nach außen gerundeten Wandabschnitten auf. Der radial äußere Einschnittabschnitt und die mittleren Einschnittabschnitte weisen eine übereinstimmende Breite von 0,6 mm bis 3,0 mm auf, wobei der gesamte Einschnitt vorzugsweise eine konstante Breite aufweist. Gemäß tabellarisch angeführten Ausführungsbeispielen beträgt die Breite des radial äußeren Einschnittabschnitts und jedes mittleren Einschnittabschnitts 0,6 mm und die maximale Breite des radial inneren Einschnittabschnitts beträgt 2,2 mm, 2,8 mm oder 3,2 mm. Bei einer maximalen Breite des radial inneren Einschnittabschnitts von 2,2 mm beträgt diese daher zirka 367% der Breite des radial äußeren Einschnittabschnitts. Die Einschnitte sollen ein günstiges Wasser- und Schneeaufnahmevermögen aufweisen sowie für das Traktionsverhalten des Reifens vorteilhaft sein.

Aus der WO 2023/107828 A1, welche ein älteres Recht iSv Art 54(3) EPÜ bildet, ist ein Fahrzeugluftreifen mit einem Laufstreifen mit Profilblöcken mit in Draufsicht in axialer Richtung verlaufenden Einschnitten bekannt. Jeder Einschnitt setzt sich, im Querschnitt betrachtet, aus einem radial äußersten Einschnittabschnitt, einem gewellt verlaufenden, mittleren Einschnittabschnitt und einem auf die maximale Tiefe des Einschnitts reichenden kanalförmigen, radial inneren Einschnittabschnitt zusammen. Der radial äußerste Einschnittabschnitt verbreitert sich V-förmig in Richtung Laufstreifenperipherie und weist eine maximale Breite (Breite an der breitesten Stelle) von 1,40 mm bis 2,60 mm, insbesondere von 1,60 mm bis 2,40 mm, bevorzugt von 1,80 mm bis 2,20 mm, beispielsweise von 2,00 mm, auf. Der mittlere Einschnittabschnitt weist eine konstante Breite von 0,20 mm bis 0,80 mm, insbesondere von 0,30 mm bis 0,70 mm, bevorzugt von 0,40 mm bis 0,60 mm, beispielsweise von 0,50 mm, auf und umfasst bevorzugt - betrachtet ausgehend vom radial äußersten Einschnittabschnitt - einen in radialer Richtung verlaufenden ersten Unterabschnitt, einen zweiten Unterabschnitt, einen dritten Unterabschnitt und einen vierten Unterabschnitt, wobei der zweite, dritte und vierte Unterabschnitt insgesamt gewellt verlaufen, sodass der mittlere Einschnittabschnitt mehrere Ausbauchungen bildet. Der erste Unterabschnitt kann als "radial äußerer Einschnittabschnitt" im Sinne eines Fahrzeugluftreifens der eingangs genannten Art aufgefasst werden. Der kanalförmige, radial innere Einschnittabschnitt weist beispielsweise eine Breite von 162% der Breite des radial äußeren Einschnittabschnitts auf.

Aus der US 11 186 054 B2 ist ein Fahrzeugluftreifen mit einem Laufstreifen mit Profilblöcken mit Einschnitten bekannt, welche, im Querschnitt betrachtet, einen in radialer Richtung verlaufenden, radial äußeren Einschnittabschnitt, einen zickzack-förmig verlaufenden, mittleren Einschnittabschnitt und einen parallel zur Laufstreifenperipherie langgestreckten, radial inneren Einschnittabschnitt aufweisen. Ferner weist der Einschnitt eine lokale, schmäler als der sonstige Einschnitt ausgeführte rechteckige Einschnittzone auf, welche vom sonstigen Einschnitt komplett umlaufen ist. Solche Einschnitte sollen für das Traktionsverhalten des Fahrzeugluftreifens günstige gegenseitige Abstützungseffekte der durch die Einschnitte gebildeten Profilblocksegmente ermöglichen.

Die AU 2020 275 890 A1 offenbart einen Nutzfahrzeugreifen mit einem Laufstreifen mit Profilblöcken, welche mit Einschnitten versehen sind, die sich, im Querschnitt betrachtet, aus einem in radialer Richtung verlaufenden, radial äußeren Einschnittabschnitt, einem wellenförmig verlaufenden, mittleren Einschnittabschnitt und einem kanalförmigen, radial inneren Eischnittabschnitt zusammensetzen. Die Breite und die Tiefe des Einschnitts sowie der Radius des kanalförmigen radial inneren Einschnittabschnitts und der zwischen aufeinanderfolgenden Einschnitten vorliegende gegenseitige Abstand sollen derart aufeinander abgestimmt sein, dass der Nutzfahrzeugreifen gute Griffeigenschaften aufweist.

Die JP 2002 316 517 A offenbart einen Fahrzeugluftreifen mit einem Laufstreifen mit Profilblöcken mit Einschnitten, deren Einschnittwände jeweils mit kuppelförmigen Vorsprüngen und diesen an der jeweils andern Einschnittwand gegenüberliegend ausbildeten, mit den Vorsprüngen korrespondierenden Vertiefungen versehen ist. Die Vorsprünge und Vertiefungen sind, betrachtet bei Sicht auf eine Einschnittwand, schachbrettartig abwechselnd angeordnet. Der Reifen soll eine gute Eis-, Schnee- und Nassbremsperformance aufweisen.

Aus der JP 4 327 962 B2 ist ein Fahrzeugluftreifen mit einem Laufstreifen mit einer radial äußeren Laufstreifenschicht und einer radial inneren Laufstreifenschicht bekannt, wobei das Gummimaterial der radial inneren Laufstreifenschicht einen Verlustfaktor bei 0°C aufweist, welcher größer ist als der Verlustfaktor bei 0°C des Gummimateriales der radial äußeren Laufsteifschicht. Der Laufstreifen weist ferner Profilpositive mit Einschnitten auf, welche, im Querschnitt betrachtet, aus einem in der radial äußeren Laufstreifenschicht liegenden, schmalen, wellenförmig verlaufenden, radial äußeren Einschnittabschnitt und einen in der radial inneren Laufstreifenschicht liegenden, radial inneren Einschnittabschnitt zusammengesetzt sind. Der Reifen soll eine gute Nässe- und Trockenperformance aufweisen.

Bei Einschnitten mit kanalförmigen, radial inneren Einschnittabschnitten wird eine Konzentration von Spannungen und Scherkräften im radial inneren Einschnittabschnitt vermieden bzw. weitgehend vermieden, was für die Rissbeständigkeit des angrenzenden Gummimateriales vorteilhaft ist. Durch diese Einschnittabschnitte wird jedoch - im Vergleich zu Einschnitten mit herkömmlich ausgeführtem Einschnittgrund - die Steifigkeit der angrenzenden Profilpositivsegmente reduziert, sodass diese unter Belastung stärker deformiert werden, was im Hinblick auf die Bremsperformance ungünstig ist. Der eine Ausbauchung bildende, im Querschnitt bogenförmig verlaufende, mittlere Einschnittabschnitt ist für die gegenseitige Abstützung der Profilsegmente unter Belastung vorteilhaft, gleicht jedoch die Nachteile des kanalförmigen, radial inneren Einschnittabschnitts im Hinblick auf die Bremsperformance nicht ausreichend aus.

Der Erfindung liegt daher die Aufgabe zugrunde, bei einem Fahrzeugluftreifen der eingangs genannten Art die Bremsperformance, insbesondere auf trockener Fahrbahn, zu verbessern.

Gelöst wird die gestellte Aufgabe erfindungsgemäß dadurch, dass der durchgehend bogenförmig verlaufende, mittlere Einschnittabschnitt eine Breite aufweist, welche zumindest 0,2 mm beträgt und um zumindest 0,2 mm kleiner ist als die Breite des radial äußeren Einschnittabschnitts.

Durch den besonders schmal ausgeführten, bogenförmig verlaufenden, mittleren Einschnittabschnitt treten schon unter geringerer Belastung, insbesondere beim Bremsen auf trockenem Untergrund, besonders effektive und vorteilhafte Abstützeffekte auf, sodass die Steifigkeit der Profilblöcke oder Profilbänder mit solchen Einschnitten mehr als bisher erhöht wird. **In** der Folge ist Bremsperformance verbessert.

Gemäß einer bevorzugten Ausführung beträgt die Breite des durchgehend bogenförmig verlaufenden, mittleren Einschnittabschnitts zumindest 0,4 mm.

Gemäß einer weiteren bevorzugten Ausführung ist die Breite des durchgehend bogenförmig verlaufenden, mittleren Einschnittabschnitts um zumindest 0,4 mm, insbesondere um zumindest 0,6 mm, vorzugsweise um zumindest 0,8 mm, besonders bevorzugt um zumindest 1,0 mm kleiner ist als die Breite des radial äußeren Einschnittabschnitts. Dies begünstigt die erwähnten, vorteilhaften Abstützungseffekte, wodurch die Steifigkeit der Profilblöcke oder Profilbänder weiter erhöht und somit die Bremsperformance weiter verbessert ist.

Bevorzugter Weise verläuft der durchgehend bogenförmig verlaufende, mittlere Einschnittabschnitt, im Querschnitt betrachtet, entlang eines Kreisbogens.

Bei einer weiteren bevorzugten Ausführung ist vorgesehen, dass der durchgehend bogenförmig verlaufende, mittlere Einschnittabschnitt eine in radialer Richtung ermittelte Länge von 10% bis 50%, insbesondere von 20% bis 40%, der maximalen Tiefe des Einschnitts aufweist. Dies begünstigt die erwähnten Abstützungseffekte, wodurch die Bremsperformance weiter verbessert ist.

In diesem Zusammenhang ist es von weiterem Vorteil, wenn der durchgehend bogenförmig verlaufende, mittlere Einschnittabschnitt eine Symmetrieebene aufweist, welche in einer in radialer Richtung ermittelten konstanten Tiefe von 25% bis 60%, insbesondere von bis zu 50%, der maximalen Tiefe des Einschnitts verläuft.

Die Abstützungseffekte sind weiter verbessert, wenn der durchgehend bogenförmig verlaufende, mittlere Einschnittabschnitt, im Querschnitt betrachtet, eine maximale Auslenkung aufweist, welche senkrecht zu einer Bezugslinie ermittelt ist, die in geradliniger Verlängerung der Einschnittmittelfläche im Bereich des radial äußeren Einschnittabschnitts verläuft und 0,5 mm bis 1,5 mm beträgt.

Eine weitere bevorzugte Ausführung sieht vor, dass der Laufstreifen laufrichtungsgebunden ausgeführt ist, sodass der Einschnitt eine beim Abrollen des Reifens bei Vorwärtsfahrt zuerst in den Untergrund eintretende, einlaufende Einschnittkante und eine auslaufende Einschnittkante aufweist, wobei der durchgehend bogenförmig verlaufende, mittlere Einschnittabschnitt derart ausgeführt ist, dass an der von der einlaufenden Einschnittkante ausgehenden Einschnittwand ein Vorsprung und eine an der von der auslaufenden Einschnittkante ausgehenden Einschnittwand eine mit dem Vorsprung korrespondierende Vertiefung ausgebildet ist. Insbesondere wenn die Einschnitte in Profilblöcken ausgebildet sind, ist diese Orientierung des bogenförmig verlaufenden, mittleren Einschnittabschnitts vorteilhaft, weil die Ausbauchung in Richtung der sogenannten Bremskante des Profilblockes gerichtet ist, was im Hinblick auf die Bremseigenschaften für besonders günstige Abstützungseffekte sorgt.

Bevorzugt weist der radial äußere Einschnittabschnitt eine auf die Einschnittmittelfläche bezogene, in radialer Richtung ermittelte Länge 5% bis 40%, insbesondere von 20% bis 30%, der maximalen Tiefe des Einschnitts auf. Folglich ist der bogenförmig verlaufende, mittlere Einschnittabschnitt von der Laufstreifenperipherie entsprechend beabstandet, was für Abstützungseffekte von weiterem Vorteil ist.

Gemäß einer weiteren bevorzugten Ausführung beträgt die maximale Breite des radial inneren Einschnittabschnitts 200% bis 350% der Breite des radial äußeren Einschnittabschnitts. Dies tragt vor allem dazu bei, dass die Steifigkeit der angrenzenden Profilpositivsegmente in einem entsprechend begrenzten Ausmaß reduziert ist, was ebenfalls für die Bremsperformance günstig ist.

Eine weitere bevorzugte Ausführung sieht vor, dass der radial innere Einschnittabschnitt, im Querschnitt betrachtet, birnen- oder tropfenförmig ausgeführt und durch radial innere Wandabschnitte der Einschnittwände begrenzt ist, wobei die radial inneren Wandabschnitte in der maximalen Tiefe tangential aneinander anschließen.

Eine vorteilhafte Ausgestaltung der letztgenannten bevorzugten Ausführung besteht darin, dass der radial innere Einschnittabschnitt eine mit der Einschnittmittelfläche zusammenfallende Symmetrieebene aufweist.

Bei dieser vorteilhaften Ausgestaltung ist es günstig, wenn der radial innere Einschnittabschnitt, im Querschnitt betrachtet, eine auf die Symmetrieebene bezogene Länge von 10% bis 30%, insbesondere von 15% bis 25%, der maximalen Tiefe des Einschnitts aufweist.

Gemäß einer weiteren bevorzugten Ausführung setzt sich der Einschnitt, im Querschnitt betrachtet, im auf die maximale Tiefe reichenden Einschnittbereich aus dem radial äußeren Einschnittabschnitt, dem durchgehend bogenförmig verlaufenden, mittleren Einschnittabschnitt, einem am radial inneren Ende des durchgehend bogenförmig verlaufenden, mittleren Einschnittabschnitts anschließenden, gerade verlaufenden, zweiten mittleren Einschnittabschnitt und dem radial inneren Einschnittabschnitt zusammen.

Eine vorteilhafte Ausgestaltung der zuletzt genannten bevorzugten Ausführung besteht darin, dass der gerade verlaufende, zweite mittlere Einschnittabschnitt eine Breite von 0,6 mm bis 2,0 mm, insbesondere von bis zu 1,6 mm, und bevorzugt von bis zu 1,2 mm aufweist, wobei die Breite des gerade verlaufenden, zweiten mittleren Einschnittabschnitts vorzugsweise mit der Breite des radial äußeren Einschnittabschnitts übereinstimmt.

Weitere Merkmale, Vorteile und Einzelheiten der Erfindung werden nun anhand der Zeichnung, die schematisch Ausführungsbeispiele der Erfindung darstellt, näher beschrieben. Dabei zeigen
Fig. 1 eine vereinfachte Draufsicht auf einen Profilblock eines Laufstreifens eines Fahrzeugluftreifens mit einer ersten Ausführungsvariante der Erfindung,
Fig. 2 einen Schnitt entlang der Linie II-II der Fig. 1 und
Fig. 3 eine Schrägansicht einer Visualisierung eines Einschnitts (Abzugskörper des Einschnitts) mit einer zweiten Ausführungsvariante der Erfindung.

Gemäß der Erfindung ausgeführte Fahrzeugluftreifen sind Reifen für Kraftfahrzeuge, insbesondere für mehrspurige Kraftfahrzeuge, sowie vorzugsweise Reifen in Radialbauart für Personenkraftwagen, Vans oder Light-Trucks (Leichte LKWs mit zGM ≤ 7,5 t).

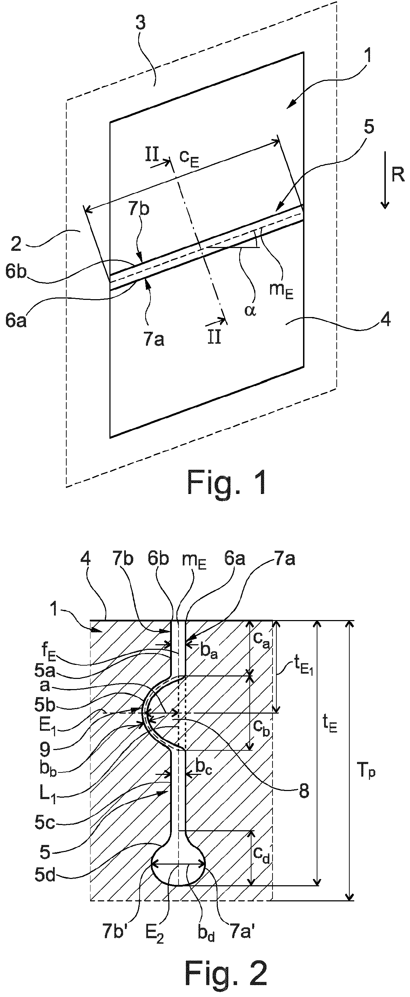

Fig. 1 zeigt eine Draufsicht auf einen mittleren Profilblock 1, welcher zu einem Laufstreifen eines Fahrzeugluftreifens gehört. Der Laufstreifen weist eine Vielzahl von Profilblöcken 1 auf und ist auf nicht gezeigte Weise laufrichtungsgebunden ausgeführt, wobei der Fahrzeugluftreifen derart an einem Fahrzeug, etwa einem PKW, zu montieren ist, dass er die durch den Pfeil R symbolisierte Abrollrichtung bei Vorwärtsfahrt aufweist.

Der Profilblock 1 ist seitlich durch in Fig. 1 lediglich angedeutete Umfangsrillen 2 und durch zwischen den Umfangsrillen 2 verlaufende, ebenfalls lediglich angedeutete Querrillen 3 begrenzt. Die Umfangsrillen 2 sowie vorzugsweise auch die Querrillen 3 sind in radialer Richtung auf die für den jeweiligen Fahrzeugluftreifen vorgesehene Profiltiefe T_{P} (angedeutet in Fig. 2) ausgeführt, welche beim erwähnten, bevorzugten Reifentyp (PKW, Van, Light-Truck) üblicherweise 6,5 mm bis 12,0 mm, insbesondere 7,0 mm bis 9,5 mm, beträgt.

Der Profilblock 1 weist an der Laufstreifenperipherie eine Blockaußenfläche 4 auf und ist bezogen auf seine Umfangserstreckung in seinem mittleren Bereich mit einem von der Blockaußenfläche 4 ausgehenden, ins radial Innere des Profilblocks 1 hineinragenden und den Profilblock 1 durchquerenden Einschnitt 5 versehen (vergl. Fig. 2).

Der Einschnitt 5 verläuft, in Draufsicht betrachtet, gerade sowie zur axialen Richtung unter einem Winkel α von 0° bis 50°, insbesondere von 5° bis 25°. Der Einschnitt 5 weist an der Blockaußenfläche 4 eine beim Abrollen des Reifens bei Vorwärtsfahrt (Pfeil R) zuerst in den Untergrund eintretende, einlaufende Einschnittkante 6a und eine auslaufende Einschnittkante 6b auf, wobei beim Abrollen des Reifens bei Vorwärtsfahrt auf der einlaufenden Einschnittkante 6a liegende Punkte jeweils vor dem exakt in Umfangsrichtung gegenüberliegenden, auf der auslaufenden Einschnittkante 6b liegenden Punkt in den Untergrund eintreten.

Wie Fig. 1 in Kombination mit Fig. 2 zeigt, weist der Einschnitt 5 eine von der einlaufenden Einschnittkante 6a ausgehende Einschnittwand 7a, eine von der auslaufenden Einschnittkante 6b ausgehende Einschnittwand 7b, eine in Draufsicht dem Einschnittverlauf folgende Einschnittmittellinie m_{E} (Fig. 1), eine von der Einschnittmittellinie m_{E} ausgehende, zu den Einschnittwänden 7a, 7b übereinstimmend beabstandete Einschnittmittelfläche f_{E} (Fig. 2), eine an der Laufstreifenperipherie entlang der Einschnittmittellinie m_{E} ermittelte Länge c_{E} (Fig. 1) und eine über die gesamte Länge c_{E} vorliegende, in radialer Richtung ermittelte maximale Tiefe t_{E} (Fig. 2, Tiefe an der jeweils tiefsten Stelle) auf. Die maximale Tiefe t_{E} beträgt 70% bis 100% der Profiltiefe T_{P} (Fig. 2), bevorzugt höchstens der um 0,5 mm verringerten Profiltiefe T_{P} (Fig. 2).

Gemäß Fig. 2 setzt sich der Einschnitt 5, im in Draufsicht senkrecht zur Einschnittmittellinie m_{E} verlaufenden Querschnitt betrachtet (vergl. Lage der Linie II-II in Fig. 1), aus einem in radialer Richtung verlaufenden, radial äußeren Einschnittabschnitt 5a, einem ersten mittleren Einschnittabschnitt 5b, einem in radialer Richtung verlaufenden, zweiten mittleren Einschnittabschnitt 5c und einem radial inneren Einschnittabschnitt 5d zusammen.

Die nachfolgende Beschreibung zu den Einschnittabschnitten 5a, 5b, 5c, 5d bezieht sich auf den in Draufsicht senkrecht zur Einschnittmittellinie m_{E} ausgerichteten Querschnitt, wie in Fig. 2 gezeigt (vergl. Lage der Linie II-II in Fig. 1).

Gemäß Fig. 2 weist der radial äußere Einschnittabschnitt 5a eine senkrecht zur Einschnittmittelfläche f_{E} ermittelte konstante Breite bₐ von 0,6 mm bis 2,0 mm, insbesondere von bis zu 1,6 mm, und bevorzugt von bis zu 1,2 mm, und eine auf die Einschnittmittelfläche f_{E} bezogene, in radialer Richtung ermittelte Länge cₐ von 5% bis 40%, insbesondere von 20% bis 30%, der maximalen Tiefe t_{E} auf.

Der zweite mittlere Einschnittabschnitt 5c verläuft in Fortsetzung zum radial äußeren Einschnittabschnitt 5a und weist eine senkrecht zur Einschnittmittelfläche f_{E} ermittelte konstante Breite b_{c} von 0,6 mm bis 2,0 mm, insbesondere von bis zu 1,6 mm, und bevorzugt von bis zu 1,2 mm auf, wobei die Breite b_{c} vorzugsweise mit der Breite bₐ übereinstimmt.

Der erste mittlere Einschnittabschnitt 5b verläuft bogenförmig, insbesondere entlang eines Kreisbogens, bildet eine Ausbauchung, weist eine auf die Einschnittmittelfläche f_{E} bezogene, in radialer Richtung ermittelte Länge c_{b} von 10% bis 50%, insbesondere von 20% bis 40%, der maximalen Tiefe t_{E}, eine senkrecht zur Einschnittmittelfläche f_{E} ermittelte konstante Breite b_{b} und eine in einer in radialer Richtung ermittelten, konstanten Tiefe t_{E1} verlaufende Symmetrieebene E₁ auf. Im Hinblick auf die Symmetrieebene E₁ bleibt die Reifenkrümmung unberücksichtigt. Die Breite b_{b} beträgt zumindest 0,2 mm, bevorzugt zumindest 0,4 mm, und ist um zumindest 0,2 mm, insbesondere um zumindest 0,4 mm, bevorzugt um zumindest 0,6 mm, besonders bevorzugt um zumindest 0,8 mm, und am meisten bevorzugt um zumindest 1,0 mm kleiner als die Breite bₐ des radial äußeren Einschnittabschnitts 5a. Die Längen cₐ, c_{b} sind vorzugsweise derart aufeinander abgestimmt, dass die Tiefe t_{E1} 25% bis 60%, insbesondere bis zu 50%, der maximalen Tiefe t_{E} beträgt. In Fig. 2 ist eine die Einschnittmittelfläche f_{E} zwischen dem radial äußeren Einschnittabschnitt 5a und dem zweiten mittleren Einschnittabschnitt 5c verbindende, gerade verlaufende Bezugslinie L₁ eingezeichnet. Der erste mittlere Einschnittabschnitt 5b weist in der Symmetrieebene E₁ eine zwischen der Bezugslinie L₁ und der Einschnittmittelfläche f_{E} ermittelte maximale Auslenkung a von 0,5 mm bis 1,5 mm auf.

Der erste mittlere Einschnittabschnitt 5b ist ferner derart ausgeführt, dass an der von der einlaufenden Einschnittkante 6a ausgehenden Einschnittwand 7a ein kreissegmentförmiger Vorsprung 8 und an der von der auslaufenden Einschnittkante 6b ausgehenden Einschnittwand 7b eine mit dem Vorsprung 8 korrespondierende Vertiefung 9 ausgebildet ist. "Korrespondierend" bedeutet, dass im ersten mittleren Einschnittabschnitt 5b die bereits erwähnte, konstante Breite b_{b} vorliegt. Die Vertiefung 9 ragt gegenüber dem im Bereich der Einschnittabschnitte 5a, 5c vorliegenden Niveau der Einschnittwand 7b in die Einschnittwand 7b hinein und der Vorsprung 8 ragt gegenüber dem im Bereich der Einschnittabschnitte 5a, 5c vorliegenden Niveau der Einschnittwand 7a von der Einschnittwand 7a ab.

Der radial innere Einschnittabschnitt 5d weist eine in radialer Richtung verlaufende, mit der Einschnittmittelfläche f_{E} zusammenfallende Symmetrieebene E₂ auf, ist birnenförmig oder tropfenförmig ausgeführt, weist eine in radialer Richtung ermittelte, auf die Einschnittmittelfläche f_{E} bzw. die Symmetrieebene E₂ bezogene Länge c_{d} von 10% bis 30%, insbesondere von 15% bis 25%, der maximalen Tiefe t_{E} sowie eine parallel zur Laufstreifenperipherie, daher senkrecht zur Einschnittmittelfläche f_{E} bzw. der Symmetrieebene E₂, ermittelte maximale Breite b_{d} (Breite an der breitesten Stelle) von 150% bis 400%, insbesondere von 200% bis 350%, der Breite bₐ des radial äußeren Einschnittabschnitts 5a auf und ist durch einen radial inneren Wandabschnitt 7b' der Einschnittwand 7b und einen radial inneren Wandabschnitt 7a' der Einschnittwand 7a begrenzt. Die radial inneren Wandabschnitte 7a', 7b' schließen in der maximalen Tiefe t_{E} tangential aneinander und verlaufen ausgehend von dieser über den Großteil der Länge c_{d} nach außen gekrümmt. Unter einer "Tropfenform" wird dabei eine einseitig spitz zulaufende Kugel verstanden.

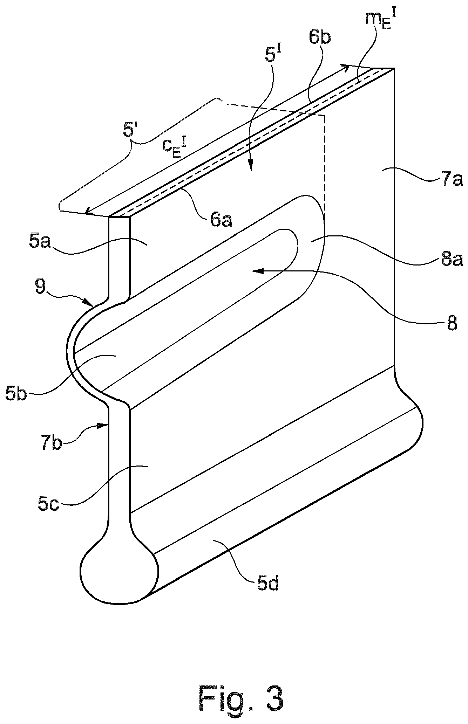

Fig. 3 zeigt eine Visualisierung eines Einschnitts 5^{I}, welcher eine Variante des Einschnitts 5 ist. Der Einschnitt 5^{I} weist an der Laufstreifenperipherie eine Einschnittmittellinie m_{E}^{I} und eine entlang der Einschnittmittellinie m_{E}^{I} ermittelte Länge c_{E}^{I} auf. Der Einschnitt 5^{I} weist sämtliche der beschriebenen Einschnittabschnitte 5a, 5b, 5c, 5d ausschließlich in einem in eine Umfangsrille (nicht gezeigt) einmündenden Einschnittbereich 5' auf, welcher, in Draufsicht betrachtet, vorzugsweise zumindest über den Großteil der Länge c_{E}^{I} reicht. Der Einschnittabschnitt 5b hat einen an der von der einlaufenden Einschnittkante 6a ausgehenden Einschnittwand 7a ausgebildeten, im Querschnitt kreissegmentförmigen Vorsprung 8 (nicht sichtbar, aber implizit erkennbar) und eine an der von der auslaufenden Einschnittkante 6b ausgehenden Einschnittwand 7b ausgebildete, mit dem Vorsprung 8 korrespondierende Vertiefung 9 (nicht sichtbar, aber implizit erkennbar) zur Folge. Die Ausführung des Einschnittabschnitts 5b ist bevorzugt derart, dass der Vorsprung 8 an seinem der Umfangsrille abgewandten, einschnittinnenseitigen Ende einen bei Sicht auf die Einschnittwand 5a halbkreisförmigen Vorsprungteil 8a aufweist. Der radial innere Einschnittabschnitt 5d verläuft beim gezeigten Ausführungsbeispiel über die gesamte Länge c_{E}^{I}.

Die Erfindung ist auf die im Zusammenhang mit den Figuren beschriebenen Ausführungsvarianten nicht beschränkt.

Die Einschnitte können in mittleren oder schulterseitigen Profilblöcken sowie in in Umfangsrichtung umlaufenden mittleren oder schulterseitigen Profilrippen ausgebildet sein.

Die Einschnitte weisen die Einschnittabschnitte jeweils zumindest in einem in Draufsicht über einen Teil des Einschnitts reichenden Einschnittbereich auf, welcher in Draufsicht vorzugsweise zumindest über den Großteil des jeweiligen Einschnitts verläuft, also über mehr als 50% der Länge des Einschnitts reicht.

Die Einschnitte können jeweils mehr als einen im Querschnitt bogenförmig verlaufenden, eine Ausbauchung bildenden Einschnittabschnitt aufweisen, wobei die Einschnitte jeweils insbesondere zwei oder drei dieser Einschnittabschnitte aufweisen.

Zwischen den einzelnen Einschnittabschnitten können verrundete Übergangsabschnitte ausgebildet sein, welche, im in Draufsicht senkrecht zur Einschnittmittellinie verlaufenden Querschnitt betrachtet und bezogen auf die Einschnittmittelfläche, einen tangentialen (knickfreien) Übergang zwischen den Einschnittabschnitten sicherstellen.

Die Einschnitte können jeweils einen in radialer Richtung angehobenen, randseitigen Einschnittbereich oder zwei in radialer Richtung angehobene, randseitige Einschnittbereiche aufweisen.

Außerdem können die Einschnitte, in Draufsicht betrachtet, zumindest abschnittsweise wellenförmig, beispielsweise in Form einer geschwungenen Welle, einer Zickzackwelle oder einer Sägezahnwelle, und/oder insgesamt gebogen (bogenförmig) verlaufen. Bei in Draufsicht insgesamt gebogen und/oder wellenförmig verlaufenden Einschnitten bezieht sich der Winkel, unter welchem die Einschnitte zur axialen Richtung verlaufen, auf eine gerade Linie, welche zwischen den Enden der dem Einschnittverlauf folgenden, daher gebogen und/oder wellenförmig verlaufenden, Einschnittmittellinie gezogen ist.

Der Laufstreifen muss nicht laufrichtungsgebunden ausgeführt sein.

### Bezugszeichenliste

- 1: Profilblock
- 2: Umfangsrille
- 3: Querrille
- 4: Blockaußenfläche
- 5, 5^{I}: Einschnitt
- 5': Einschnittbereich
- 5a: radial äußerer Einschnittabschnitt
- 5b: erster mittlerer Einschnittabschnitt
- 5c: zweiter mittlerer Einschnittabschnitt
- 5d: radial innerer Einschnittabschnitt
- 6a: einlaufende Einschnittkante
- 6b: auslaufende Einschnittkante
- 7a: Einschnittwand
- 7a': radial innerer Wandabschnitt
- 7b: Einschnittwand
- 7b': radial innerer Wandabschnitt
- 8: Vorsprung
- 8a: Vorsprungteil
- 9: Vertiefung
- a: maximale Auslenkung
- bₐ, b_{b}, b_{c}: Breite
- b_{d}: maximale Breite
- cₐ, c_{b}, c_{E}, c_{E}^{I}, c_{d}: Länge
- E₁, E₂: Symmetrieebene
- f_{E}: Einschnittmittelfläche
- L₁: Bezugslinie
- m_{E}, m_{E}^{I}: Einschnittmittellinie
- t_{E}: maximale Tiefe
- t_{E1}: Tiefe
- T_{P}: Profiltiefe
- R: Pfeil (Abrollrichtung)
- α: Winkel

## Patentansprüche

1. Fahrzeugluftreifen mit einem Laufstreifen mit Profilblöcken (1) und/oder mit zumindest einer in Umfangsrichtung umlaufenden Profilrippe, in welchen bzw. in welcher in Draufsicht unter einem Winkel (α) von 0° bis zu 50° zur axialen Richtung verlaufende, jeweils zwei Einschnittwände (7a, 7b) aufweisende Einschnitte (5, 5^{I}) ausgebildet sind, wobei jeder Einschnitt (5, 5^{I}) zumindest in einem in Draufsicht über einen Teil des Einschnitts (5, 5^{I}) reichenden Einschnittbereich (5') auf seine maximale Tiefe (t_{E}) von 70% bis 100% der Profiltiefe (T_{P}) reicht, wobei der Einschnitt (5) in diesem Einschnittbereich (5'), im Querschnitt betrachtet, einen gerade verlaufenden, radial äußeren Einschnittabschnitt (5a) mit einer konstanten Breite (bₐ) von 0,6 mm bis 2,0 mm, einen an diesen anschließenden, eine einzige Ausbauchung bildenden, durchgehend bogenförmig verlaufenden, mittleren Einschnittabschnitt (5b) und einen auf die maximale Tiefe (t_{E}) reichenden, kanalförmigen, radial inneren Einschnittabschnitt (5d) mit einer maximalen Breite (b_{d}) von 150% bis 400% der Breite (bₐ) des radial äußeren Einschnittabschnitts (5a) aufweist,
**dadurch gekenzeichnet,**
dass der durchgehend bogenförmig verlaufende, mittlere Einschnittabschnitt (5b) eine Breite (b_{b}) aufweist, welche zumindest 0,2 mm beträgt und um zumindest 0,2 mm kleiner ist als die Breite (bₐ) des radial äußeren Einschnittabschnitts (5a).

2. Fahrzeugluftreifen nach Anspruch 1, **dadurch gekennzeichnet, dass** die Breite (b_{b}) des durchgehend bogenförmig verlaufenden, mittleren Einschnittabschnitts (5b) zumindest 0,4 mm beträgt.

3. Fahrzeugluftreifen nach Anspruch 1 oder 2, **dadurch gekennzeichnet, dass** die Breite (b_{b}) des durchgehend bogenförmig verlaufenden, mittleren Einschnittabschnitts (5b) um zumindest 0,4 mm, insbesondere um zumindest 0,6 mm, vorzugsweise um zumindest 0,8 mm, besonders bevorzugt um zumindest 1,0 mm kleiner ist als die Breite (bₐ) des radial äußeren Einschnittabschnitts (5a).

4. Fahrzeugluftreifen nach einem der Ansprüche 1 bis 3, **dadurch gekennzeichnet, dass** der durchgehend bogenförmig verlaufende, mittlere Einschnittabschnitt (5b), im Querschnitt betrachtet, entlang eines Kreisbogens verläuft.

5. Fahrzeugluftreifen einen der Ansprüche 1 bis 4, **dadurch gekennzeichnet, dass** der durchgehend bogenförmig verlaufende, mittlere Einschnittabschnitt (5b) eine in radialer Richtung ermittelte Länge (c_{b}) von 10% bis 50%, insbesondere von 20% bis 40%, der maximalen Tiefe (t_{E}) des Einschnitts (5, 5^{I}) aufweist.

6. Fahrzeugluftreifen nach einem der Ansprüche 1 bis 5, **dadurch gekennzeichnet, dass** der durchgehend bogenförmig verlaufende, mittlere Einschnittabschnitt (5b) eine Symmetrieebene (E₁) aufweist, welche in einer in radialer Richtung ermittelten konstanten Tiefe (t_{E1}) von 25% bis 60%, insbesondere von bis zu 50%, der maximalen Tiefe (t_{E}) des Einschnitts (5, 5^{I}) verläuft.

7. Fahrzeugluftreifen nach einem der Ansprüche 1 bis 6, **dadurch gekennzeichnet, dass** der durchgehend bogenförmig verlaufende, mittlere Einschnittabschnitt (5b), im Querschnitt betrachtet, eine maximale Auslenkung (a) aufweist, welche senkrecht zu einer Bezugslinie (L₁) ermittelt ist, die in geradliniger Verlängerung der Einschnittmittelfläche (f_{E}) im Bereich des radial äußeren Einschnittabschnitts (5a) verläuft und 0,5 mm bis 1,5 mm beträgt.

8. Fahrzeugluftreifen nach einem der Ansprüche 1 bis 7, **dadurch gekennzeichnet, dass** der Laufstreifen laufrichtungsgebunden ausgeführt ist, sodass der Einschnitt (5) eine beim Abrollen des Reifens bei Vorwärtsfahrt (Pfeil R) zuerst in den Untergrund eintretende, einlaufende Einschnittkante (6a) und eine auslaufende Einschnittkante (6b) aufweist, wobei der durchgehend bogenförmig verlaufende, mittlere Einschnittabschnitt (5b) derart ausgeführt ist, dass an der von der einlaufenden Einschnittkante (6a) ausgehenden Einschnittwand (7a) ein Vorsprung (8) und eine an der von der auslaufenden Einschnittkante (6b) ausgehenden Einschnittwand (7b) eine mit dem Vorsprung (8) korrespondierende Vertiefung (9) ausgebildet ist.

9. Fahrzeugluftreifen nach einem der Ansprüche 1 bis 8, **dadurch gekennzeichnet, dass** der radial äußere Einschnittabschnitt (5a) eine auf die Einschnittmittelfläche (f_{E}) bezogene, in radialer Richtung ermittelte Länge (cₐ) von 5% bis 40%, insbesondere von 20% bis 30%, der maximalen Tiefe (t_{E}) des Einschnitts (5, 5^{I}) aufweist.

10. Fahrzeugluftreifen nach einem der Ansprüche 1 bis 9, **dadurch gekennzeichnet, dass** die maximale Breite (b_{d}) des radial inneren Einschnittabschnitts (5d) 200% bis 350% der Breite (bₐ) des radial äußeren Einschnittabschnitts (5a) beträgt.

11. Fahrzeugluftreifen nach einem der Ansprüche 1 bis 10, **dadurch gekennzeichnet, dass** der radial innere Einschnittabschnitt (5d), im Querschnitt betrachtet, birnen- oder tropfenförmig ausgeführt und durch radial innere Wandabschnitte (7a', 7b') der Einschnittwände (7a', 7b') begrenzt ist, wobei die radial inneren Wandabschnitte (7a', 7b') in der maximalen Tiefe (t_{E}) tangential aneinander anschließen.

12. Fahrzeugluftreifen nach Anspruch 11, **dadurch gekennzeichnet, dass** der radial innere Einschnittabschnitt (5d) eine mit der Einschnittmittelfläche (f_{E}) zusammenfallende Symmetrieebene (E₂) aufweist.

13. Fahrzeugluftreifen nach Anspruch 12, **dadurch gekennzeichnet, dass** der radial innere Einschnittabschnitt (5d), im Querschnitt betrachtet, eine auf die Symmetrieebene (E₂) bezogene Länge (c_{d}) von 10% bis 30%, insbesondere von 15% bis 25%, der maximalen Tiefe (t_{E}) des Einschnitts (5, 5^{I}) aufweist.

14. Fahrzeugluftreifen nach einem der Ansprüche 1 bis 13, **dadurch gekennzeichnet, dass** sich der Einschnitt (5, 5^{I}), im Querschnitt betrachtet, im auf die maximale Tiefe (t_{E}) reichenden Einschnittbereich (5') aus dem radial äußeren Einschnittabschnitt (5a), dem durchgehend bogenförmig verlaufenden, mittleren Einschnittabschnitt (5b), einem am radial inneren Ende des durchgehend bogenförmig verlaufenden, mittleren Einschnittabschnitts (5b) anschließenden, gerade verlaufenden, zweiten mittleren Einschnittabschnitt (5c) und dem radial inneren Einschnittabschnitt (5d) zusammensetzt.

15. Fahrzeugluftreifen nach Anspruch 14, **dadurch gekennzeichnet, dass** der gerade verlaufende, zweite mittlere Einschnittabschnitt (5c) eine Breite (b_{c}) von 0,6 mm bis 2,0 mm, insbesondere von bis zu 1,6 mm, und bevorzugt von bis zu 1,2 mm aufweist, wobei die Breite (b_{c}) des gerade verlaufenden, zweiten mittleren Einschnittabschnitts (5c) vorzugsweise mit der Breite (bₐ) des radial äußeren Einschnittabschnitts (5a) übereinstimmt.

## Claims

1. Pneumatic vehicle tyre comprising a tread with profile blocks (1) and/or with at least one profile rib running around in the circumferential direction, in which blocks or rib(s) sipes (5, 5^{I}) are formed, running at an angle (α) of 0° to 50° to the axial direction in plan view and respectively having two sipe walls (7a, 7b), wherein each sipe (5, 5^{I}), at least in a sipe region (5') reaching over part of the sipe (5, 5^{I}) in plan view, reaches to its maximum depth (t_{E}) of 70% to 100% of the profile depth (T_{P}), wherein, when seen in cross section, the sipe (5) has in this sipe region (5') a straight-running, radially outer sipe portion (5a), with a constant width (bₐ) of 0.6 mm to 2.0 mm, a continuously arcuately running middle sipe portion (5b), adjoining the outer portion and forming a single bulge, and a channel-shaped, radially inner sipe portion (5d), reaching to the maximum depth (t_{E}) and having a maximum width (b_{d}) of 150% to 400% of the width (bₐ) of the radially outer sipe portion (5a),
**characterized**
**in that** the continuously arcuately running middle sipe portion (5b) has a width (b_{b}) which is at least 0.2 mm and is less than the width (bₐ) of the radially outer sipe portion (5a) by at least 0.2 mm.

2. Pneumatic vehicle tyre according to Claim 1, **characterized in that** the width (b_{b}) of the continuously arcuately running middle sipe portion (5b) is at least 0.4 mm.

3. Pneumatic vehicle tyre according to Claim 1 or 2, **characterized in that** the width (b_{b}) of the continuously arcuately running middle sipe portion (5b) is less than the width (bₐ) of the radially outer sipe portion (5a) by at least 0.4 mm, in particular by at least 0.6 mm, preferably by at least 0.8 mm, particularly preferably by at least 1.0 mm.

4. Pneumatic vehicle tyre according to one of Claims 1 to 3, **characterized in that**, when seen in cross section, the continuously arcuately running middle sipe portion (5b) runs along an arc of a circle.

5. Pneumatic vehicle tyre one of Claims 1 to 4, **characterized in that** the continuously arcuately running middle sipe portion (5b) has a length (c_{b}), determined in the radial direction, of 10% to 50%, in particular of 20% of 40%, of the maximum depth (t_{E}) of the sipe (5, 5^{I}).

6. Pneumatic vehicle tyre according to one of Claims 1 to 5, **characterized in that** the continuously arcuately running middle sipe portion (5b) has a plane of symmetry (E₁) which runs at a constant depth (t_{E1}), determined in the radial direction, of 25% to 60%, in particular of up to 50%, of the maximum depth (t_{E}) of the sipe (5, 5^{I}).

7. Pneumatic vehicle tyre according to one of Claims 1 to 6, **characterized in that**, when seen in cross section, the continuously arcuately running middle sipe portion (5b) has a maximum deflection (a), which is determined perpendicularly to a reference line (L₁), extends as a straight continuation of the sipe midplane (f_{E}) in the region of the radially outer sipe portion (5a) and is 0.5 mm to 1.5 mm.

8. Pneumatic vehicle tyre according to one of Claims 1 to 7, **characterized in that** the tread is of a directional design, so that the sipe (5) has a leading sipe edge (6a), arriving first at ground level when the tyre is rolling during forward travel (arrow R), and a trailing sipe edge (6b), wherein the continuously arcuately running middle sipe portion (5b) is designed in such a way that a projection (8) is formed on the sipe wall (7a) extending from the leading sipe edge (6a) and an indentation (9), corresponding to the projection (8), is formed on the sipe wall (7b) extending from the trailing sipe edge (6b).

9. Pneumatic vehicle tyre according to one of Claims 1 to 8, **characterized in that** the radially outer sipe portion (5a) has a length (cₐ), determined in the radial direction with respect to the sipe midplane (f_{E}), of 5% to 40%, in particular of 20% to 30%, of the maximum depth (t_{E}) of the sipe (5, 5^{I}).

10. Pneumatic vehicle tyre according to one of Claims 1 to 9, **characterized in that** the maximum width (b_{d}) of the radially inner sipe portion (5d) is 200% to 350% of the width (bₐ) of the radially outer sipe portion (5a).

11. Pneumatic vehicle tyre according to one of Claims 1 to 10, **characterized in that**, when seen in cross section, the radially inner sipe portion (5d) is of a pear-shaped or droplet-shaped design and is delimited by radially inner wall portions (7a', 7b') of the sipe walls (7a', 7b'), wherein the radially inner wall portions (7a', 7b') at the maximum depth (t_{E}) adjoin one another tangentially.

12. Pneumatic vehicle tyre according to Claim 11, **characterized in that** the radially inner sipe portion (5d) has a plane of symmetry (E₂) coinciding with the sipe midplane (f_{E}).

13. Pneumatic vehicle tyre according to Claim 12, **characterized in that**, when seen in cross section, the radially inner sipe portion (5d) has a length (c_{d}), with respect to the plane of symmetry (E₂), of 10% to 30%, in particular of 15% to 25%, of the maximum depth (t_{E}) of the sipe (5, 5^{I}).

14. Pneumatic vehicle tyre according to one of Claims 1 to 13, **characterized in that**, when seen in cross section, the sipe (5, 5^{I}) is made up in the sipe region (5') reaching to the maximum depth (t_{E}) by the radially outer sipe portion (5a), the continuously arcuately running middle sipe portion (5b), a straight-running, second middle sipe portion (5c), adjoining the continuously arcuately running middle sipe portion (5b) at the radially inner end, and the radially inner sipe portion (5d).

15. Pneumatic vehicle tyre according to Claim 14, **characterized in that** the straight-running, second middle sipe portion (5c) has a width (b_{b}) of 0.6 mm to 2.0 mm, in particular of up to 1.6 mm, and preferably of up to 1.2 mm, wherein the width (b_{c}) of the straight-running, second middle sipe portion (5c) preferably coincides with the width (bₐ) of the radially outer sipe portion (5a).

## Revendications

1. Pneu de véhicule avec une bande de roulement avec des blocs de profil (1) et/ou au moins une nervure de profil s'étendant dans la direction circonférentielle, dans lesquels ou dans laquelle sont réalisées, en vue de dessus, des entailles (5, 5^{I}) s'étendant selon un angle (α) de 0° à 50° par rapport à la direction axiale, présentant chacune deux parois d'entaille (7a, 7b), chaque entaille (5, 5^{I}) s'étendant, au moins dans une zone d'entaille (5') couvrant en vue de dessus une partie de l'entaille (5, 5^{I}), jusqu'à sa profondeur maximale (t_{E}) de 70 % à 100 % de la profondeur de profil (T_{P}), l'entaille (5) présentant dans cette zone d'entaille (5'), considérée en coupe transversale, une section d'entaille radialement extérieure (5a) s'étendant de manière rectiligne d'une largeur constante (bₐ) de 0,6 mm à 2,0 mm, une section d'entaille centrale (5b) s'étendant de manière continue en forme d'arc, formant un seul renflement, se raccordant à celle-ci, et une section d'entaille radialement intérieur (5d), en forme de canal, s'étendant jusqu'à la profondeur maximale (t_{E}), d'une largeur maximale (b_{d}) de 150 % à 400 % de la largeur (bₐ) de la section d'entaille radialement extérieure (5a),
**caractérisé**
**en ce que** la section d'entaille centrale (5b) s'étendant de manière continue en forme d'arc présente une largeur (b_{b}) qui est d'au moins 0,2 mm et qui est au moins 0,2 mm inférieure à la largeur (bₐ) de la section d'entaille radialement extérieure (5a).

2. Pneu de véhicule selon la revendication 1, **caractérisé en ce que** la largeur (b_{b}) de la section d'entaille centrale (5b) s'étendant de manière continue en forme d'arc, est d'au moins 0,4 mm.

3. Pneu de véhicule selon la revendication 1 ou 2, **caractérisé en ce que** la largeur (b_{b}) de la section d'entaille centrale (5b) s'étendant de manière continue en forme d'arc est au moins 0,4 mm, notamment au moins 0,6 mm, de préférence au moins 0,8 mm, de manière particulièrement préférée au moins 1,0 mm inférieure à la largeur (bₐ) de la section d'entaille radialement extérieure (5a).

4. Pneu de véhicule selon l'une quelconque des revendications 1 à 3, **caractérisé en ce que** la section d'entaille centrale (5b) s'étendant de manière continue en forme d'arc s'étend, considérée en coupe transversale, le long d'un arc de cercle.

5. Pneu de véhicule selon l'une quelconque des revendications 1 à 4, **caractérisé en ce que** la section d'entaille centrale (5b) s'étendant de manière continue en forme d'arc présente une longueur (c_{b}) déterminée dans la direction radiale de 10 % à 50 %, notamment de 20 % à 40 %, de la profondeur maximale (t_{E}) de l'entaille (5, 5^{I}).

6. Pneu de véhicule selon l'une quelconque des revendications 1 à 5, **caractérisé en ce que** la section d'entaille centrale (5b) s'étendant de manière continue en forme d'arc présente un plan de symétrie (E₁) qui s'étend à une profondeur constante (t_{E1}) déterminée dans la direction radiale de 25 % à 60 %, notamment jusqu'à 50 %, de la profondeur maximale (t_{E}) de l'entaille (5, 5^{I}).

7. Pneu de véhicule selon l'une quelconque des revendications 1 à 6, **caractérisé en ce que** la section d'entaille centrale (5b) s'étendant de manière continue en forme d'arc présente, considérée en coupe transversale, une déviation maximale (a) qui est déterminée perpendiculairement à une ligne de référence (L₁) qui s'étend dans le prolongement rectiligne de la surface centrale d'entaille (f_{E}) dans la zone de la section d'entaille radialement extérieure (5a) et qui est de 0,5 mm à 1,5 mm.

8. Pneu de véhicule selon l'une quelconque des revendications 1 à 7, **caractérisé en ce que** la bande de roulement est conçue sous forme directionnelle, de telle sorte que l'entaille (5) présente un bord d'entaille entrant (6a) qui pénètre en premier dans le sol lors du roulement du pneu en marche avant (flèche R) et un bord d'entaille sortant (6b), la section d'entaille centrale (5b) s'étendant de manière continue en forme d'arc étant conçue de telle sorte qu'une saillie (8) est réalisée sur la paroi d'entaille (7a) partant du bord d'entaille entrant (6a) et un renfoncement (9) correspondant à la saillie (8) est réalisé la paroi d'entaille (7b) partant du bord d'entaille sortant (6b).

9. Pneu de véhicule selon l'une quelconque des revendications 1 à 8, **caractérisé en ce que** la section d'entaille radialement extérieure (5a) présente une longueur (cₐ) déterminée dans la direction radiale par rapport à la surface centrale d'entaille (f_{E}) de 5 % à 40 %, notamment de 20 % à 30 %, de la profondeur maximale (t_{E}) de l'entaille (5, 5^{I}).

10. Pneu de véhicule selon l'une quelconque des revendications 1 à 9, **caractérisé en ce que** la largeur maximale (b_{d}) de la section d'entaille radialement intérieure (5d) est de 200 % à 350 % de la largeur (bₐ) de la section d'entaille radialement extérieure (5a).

11. Pneu de véhicule selon l'une quelconque des revendications 1 à 10, **caractérisé en ce que** la section d'entaille radialement intérieure (5d), considérée en coupe transversale, est conçue en forme de poire ou de goutte et est délimitée par des sections de paroi radialement intérieures (7a', 7b') des parois d'entaille (7a', 7b'), les sections de paroi radialement intérieures (7a', 7b') se raccordant tangentiellement l'une à l'autre à la profondeur maximale (t_{E}).

12. Pneu de véhicule selon la revendication 11, **caractérisé en ce que** la section d'entaille radialement intérieure (5d) présente un plan de symétrie (E₂) coïncidant avec la surface centrale d'entaille (f_{E}).

13. Pneu de véhicule selon la revendication 12, **caractérisé en ce que** la section d'entaille radialement intérieure (5d), considérée en coupe transversale, présente une longueur (c_{d}) par rapport au plan de symétrie (E₂) de 10 % à 30 %, notamment de 15 % à 25 %, de la profondeur maximale (t_{E}) de l'entaille (5, 5^{I}).

14. Pneu de véhicule selon l'une quelconque des revendications 1 à 13, **caractérisé en ce que** l'entaille (5, 5^{I}) se compose, considérée en coupe transversale, dans la zone d'entaille (5') s'étendant jusqu'à la profondeur maximale (t_{E}), de la section d'entaille radialement extérieure (5a), de la section d'entaille centrale (5b) s'étendant de manière continue en forme d'arc, d'une deuxième section d'entaille centrale (5c) s'étendant de manière rectiligne, se raccordant à l'extrémité radialement intérieure de la section d'entaille centrale (5b) s'étendant de manière continue en forme d'arc, et de la section d'entaille radialement intérieure (5d).

15. Pneu de véhicule selon la revendication 14, **caractérisé en ce que** la deuxième section d'entaille centrale (5c) s'étendant de manière rectiligne présente une largeur (b_{c}) de 0,6 mm à 2,0 mm, notamment de jusqu'à 1,6 mm, et de préférence de jusqu'à 1,2 mm, la largeur (b_{c}) de la deuxième section d'entaille centrale (5c) s'étendant de manière rectiligne coïncidant de préférence avec la largeur (bₐ) de la section d'entaille radialement extérieure (5a).
